# EUROPÄISCHE PATENTSCHRIFT

(11) **EP 1 319 456 B1**
(45) Veröffentlichungstag und Bekanntmachung des Hinweises auf die Patenterteilung: **17.08.2005**
(21) Anmeldenummer: 02027209.2
(22) Anmeldetag: 05.12.2002
(51) Int. Cl.: B23D 29/02

(54) **Kabelschneider**
Cable cutter
Découpeur de câbles

(30) Priorität: 14.12.2001 DE 20120275 U
(43) Veröffentlichungstag der Anmeldung: 18.06.2003
(73) Patentinhaber: Harry P. Will Werkzeugfabrik GmbH & Co. KG, 35279 Neustadt/Hessen (DE)
(72) Erfinder: Still, Thomas E., 35260 Stadtallendorf (DE)
(74) Vertreter: Buchhold, Jürgen, Dipl.-Phys.

(56) Entgegenhaltungen:
- EP-A- 1 147 859
- DE-U- 8 716 229
- US-A- 1 123 243
- US-A- 2 410 889
- US-A- 5 974 670
- US-A1- 2001 006 001

## Beschreibung

Die Erfindung betrifft einen Kabelschneider gemäß dem Oberbegriff von Anspruch 1.

Kabelschneider und Kabelscheren werden in unterschiedlichen Ausführungen zum Durchtrennen von Rohren, Kabeln und Leitungen aus Kupfer, Stahl, Pianodraht oder Glasfasern verwendet.

Eine bekannte Kabelschere besteht beispielsweise aus zwei über Kreuz liegenden und durch ein Drehgelenk miteinander verbundenen Hebeln. Jeder der beiden, mit einer Hand zu bedienenden Hebel besitzt oberhalb des Drehgelenks eine Schneidbacke und ist darunter zu einem Griff geformt. Die langen Griffe erlauben es dem Anwender, relativ hohe Schneiddrücke zu erzeugen. In Einhandbedienung ist dies jedoch nur beim Durchtrennen von Leitungen mit kleinen Querschnitten möglich, weil die handweite Öffnung der Griffe nur ein begrenztes Öffnen der Schneidbacken ermöglicht.

Die Möglichkeit, bei weit geöffnetem Werkzeug die Handgriffe in eine engere, mit einer Hand zu ergreifende Stellung zu bringen, ist für Preßwerkzeuge zum Fügen von Bauteilen wie Rohren oder Kabelschuhen bereits bekannt. Hierzu ist bei einer in DE-C1-199 63 097 (= US-A-2001/0006001) offenbarten Zange zum mehrstufigen Verpressen eines Werkstücks in einigen wenigen Preßstufen mindestens einer der Handhebel in zwei Teilhebel unterteilt. Die beiden Teilhebel sind in einer bestimmten Winkellage so miteinander kuppelbar, daß die dem Zangenkopf abgekehrten Endbereiche der beiden Hebel auch bei großer Öffnungsweite noch mit den Fingern zumindest einer Hand umgreifbar und zusammendrückbar sind. Auch DE-U1-201 04 732 beschreibt eine Preßzange, die einen Einhandbetrieb bei weit geöffneten Preßbacken erlaubt. Sie erreicht dies ebenfalls durch die Unterteilung eines beweglichen Handgriffs in zwei Griffpositionen, so daß der bewegliche Handgriff in eine geknickte Stellung bringbar ist.

Ein wesentlicher Nachteil dieser bekannten Preßzangen besteht darin, daß die Teilhebel lediglich in ihrer langgestreckten Griffpositionen durch einen einfachen Riegel gegen Einknicken gesichert sind. Die geknickte Stellung der Teilhebel ist hingegen überhaupt nicht gesichert, so daß sich die Zange beim Öffnen unbeabsichtigt verstellen kann, was zu Problemen bei der Handhabung führen kann. Der Riegel hintergreift überdies ein separates Verbindungsteil, was nicht nur aufwendig, sondern auch teuer in der Herstellung ist.

Ein in US-PS-5,974,670 offenbartes Schneidwerkzeug zum Durchtrennen von Stahlseilen hat ebenfalls zwei in einem gemeinsamen Drehgelenk schwenkbar verbundene, sich kreuzende Hebel. Der erste Hebel ist einteilig, während der zweite Hebel einen vorderen Hebelabschnitt mit Schneidbacke sowie einen sich zum Handgriff erstreckenden hinteren Hebelabschnitt aufweist. Beide Hebelabschnitte sind in einem zweiten Drehgelenk über eine Zahnscheibe miteinander verbunden. Der griffseitige Hebelabschnitt besitzt zudem ein gelenkig verschwenkbares Blockierstück. Dieses ist über eine Schaltstange mit dem Handgriff verbunden und mit zwei Sperrklinken versehen. Jede von ihnen läßt sich durch Drehen das Handgriffs mit der Zahnscheibe in Eingriff bringen. Dadurch werden die Hebelabschnitte in wenigstens zwei Winkelstellungen so zueinander fixiert, daß sie nur noch in eine Drehrichtung gegeneinander verschwenkbar sind. Es gelingt also nicht, sie vollständig starr zueinander anzuordnen und damit jegliches Verrutschen oder Verstellen während des Schneidvorgangs zu vermeiden. Zudem läßt sich die Schneidvorrichtung kaum mit einer Hand betätigen, weil man eine davon bereits zum Halten und Drehen des Handgriffs benötigt.

Ziel der Erfindung ist es, diese und weitere Nachteile des Standes der Technik zu überwinden und einen kostengünstigen sowie einfach herzustellenden Kabelschneider zu schaffen, mit dem man dünne und dicke Leitungen mühelos durchtrennen kann. Dabei soll eine Einhandbedienung möglich sein. Angestrebt wird ferner eine einfache und unkomplizierte Handhabung sowie eine stets hohe Betriebssicherheit.

Hauptmerkmale der Erfindung sind im kennzeichnenden Teil von Anspruch 1 angegeben. Ausgestaltungen sind Gegenstand der Ansprüche 2 bis 14.

Bei einem Kabelschneider zum Durchtrennen von Kabeln, Leitungen, Rohren u.dgl. mit zwei in einem gemeinsamen ersten Drehgelenk schwenkbar verbundenen, sich kreuzenden Hebeln, die in ihren unteren Bereichen jeweils einen Handgriff und in ihren oberen Bereichen je eine Schneidbacke haben, wobei einer der Hebel zweiteilig ausgebildet ist, mit einem die Schneidbacke bildenden vorderen Hebelabschnitt und mit einem den Handgriff bildenden hinteren Hebelabschnitt und wobei die Hebelabschnitte über ein zweites Drehgelenk schwenkbar miteinander verbundenen und in wenigstens zwei ausgezeichneten Winkelstellungen miteinander verrastbar sind, sieht die Erfindung vor,
a) daß die Schwenkbewegung der Hebelabschnitte zwischen den ausgezeichneten Winkelstellungen von einem in einer Führungsausnehmung geführten Gleitelement begrenzt ist, wobei das Gleitelement ein Rastelement ist oder bildet,
b) daß das Gleitelement in den ausgezeichneten Winkelstellungen der Hebelabschnitte mit je einer korrespondierenden Rastausnehmung in Eingriff bringbar ist,
c) wobei die Rastausnehmungen in der Führungsausnehmung ausgebildet sind, und
d) wobei das Gleitelement ein längsbeweglich gelagerter, federbelasteter Bolzen ist.

Mit dieser ebenso einfachen wie kostengünstig zu realisierenden Bauform eines Kabelschneiders ist der Anwender stets in der Lage, die beiden Handgriffe in einer solchen Winkelstellung zu positionieren, die eine bequeme und sichere Bedienung mit einer Hand erlaubt. Dieser Einhandbetrieb ist auch bei extrem weiter Öffnungsstellung der Schneidbacken, wie beispielsweise für Kabel bis 25 mm Durchmesser, noch möglich, so daß dünne wie dicke Leitungen mühelos durchtrennt werden können. Dabei gewährleistet der Kabelschneider selbst bei extrem dicken Kabeln einen stets sauberen Schnitt durch die Leitung. Weitere Werkzeuge oder andere Hilfsmittel sind nicht erforderlich.

Die Verrastung der Hebelabschnitte in den jeweils ausgezeichneten Winkelstellungen verhindert, daß die Hebelabschnitte am zweiten Drehgelenk uneingeschränkt gegeneinander bewegbar sind und daß sie sich während des gesamten Arbeitsvorgangs verstellen oder gar versehentlich bewegen. Sie sorgt dafür, daß die Abschnitte in jeder Arbeitsstellung des Kabelschneiders in der vorgesehenen Winkelstellung verbleiben, was die gesamte Handhabung deutlich verbessert. Ein unbeabsichtigtes Verstellen des Schneiders beim Öffnen oder Schließen ist nicht mehr möglich, was sich günstig auf die Betriebssicherheit auswirkt. Der Anwender hat den Kabelschneider in optimaler Paßform stets fest im Griff.

Das Gleitelement begrenzt nicht nur die Schwenkbewegung der Hebelabschnitte zueinander. Es ist in den ausgezeichneten Winkelstellungen der Hebelabschnitte mit je einer korrespondierenden Rastausnehmung in Eingriff bringbar und nach Anspruch 2 selbsttätig darin verrastbar. Dies ist besonders vorteilhaft, denn nur der rastende Eingriff des Gleitelements gewährleistet auch bei hohen auf die Hebel ausgeübten Kräften, daß die Winkelstellung der Hebelabschnitte zueinander erhalten bleibt. Zudem erleichtert die selbsttätige Verrastung des Gleitelements seine Bedienung.

Das Gleitelement sollte nach Möglichkeit platzsparend ausgeführt sein, um einen kleinvolumigen Kabelschneider zu schaffen, der auch in beengten Arbeitsumgebungen einsetzbar ist. Nach Anspruch 3 ist der längsbeweglich gelagerte, federbelastete Bolzen deshalb parallel zu den Achsen der Drehgelenke angeordnet. Er durchragt beide Hebelabschnitte und steht vom vorderen Hebelabschnitt nach außen ab. Eine solche Anordnung ist immer dann sinnvoll, wenn ein kurzer, aber nicht unbedingt flacher Kabelschneider benötigt wird, bei dem die Handgriffe bis an den vorderen Hebelabschnitt heranreichen.

Wird eine sehr flache Bauweise gefordert, sieht die Ausgestaltung des Anspruchs 4 vor, daß der Bolzen senkrecht zu den Achsen der Drehgelenke angeordnet ist. In der Regel befindet er sich handgriffseitig unterhalb des vorderen Hebelabschnitts. Dabei ist er beispielsweise so ausgelegt, daß er den vorderen Hebelabschnitt höhenmäßig nicht überragt und stets von der Greifhand bedient werden kann.

Der Bolzen ist nach Anspruch 5 am vorderen Hebelabschnitt angeordnet. Seine zum hinteren Hebelabschnitt gerichtete Seite ist im Einklang mit Anspruch 6 verdickt oder verbreitert ausgeführt. Für die Erfindung ist dies zweckmäßig, denn der Bolzen ist auf seinem Weg durch die Führungsausnehmung nur in den ausgezeichneten Rastausnehmungen verrastbar, was Fehlbedienungen verhindert. Die Anordnung des Bolzens am vorderen Hebelabschnitt erleichtert einen nach intensivem Gebrauch des Kabelschneiders eventuell erforderlichen Austausch einer auf den Bolzen aufgesteckten Druckfeder.

Von Bedeutung ist das in Anspruch 7 offenbarte Merkmal, wonach die Führungsausnehmung ein konzentrisch zum zweiten Drehgelenk im hinteren Hebelabschnitt ausgebildetes Langloch ist, welches zumindest endseitig Rastausnehmungen aufweist. Diese Rastausnehmungen sind nach Anspruch 8 Sacklöcher. Letztere bieten dem endseitig verdickten Bolzen einen sicheren Halt in der jeweils eingenommen Rastposition. Gleichzeitig wird jedoch ein Einrasten in den übrigen Abschnitten des Langlochs verhindert. Das konzentrisch angeordnete Langloch macht ferner bei gelöstem Bolzen ein leichtes Verschwenken der Hebelabschnitte um das zweite Drehgelenk möglich.

Gemäß der Ausführung in Anspruch 9 überlappen sich die Hebelabschnitte an ihren einander zugewandten Enden flächig. Dies gewährleistet ein zuverlässiges Zusammenwirken von zweitem Drehgelenk und Gleitelement, wobei sich die Hebelabschnitte gegenseitig stützen.

Eine Weiterführung der Erfindung ist in den Ansprüchen 10 und 11 vorgesehen. Danach weist einer der Hebel eine Hervorhebung auf, die in Richtung des jeweils anderen Hebels zeigt und sich bei geschlossenen Hebeln auf dem gegenüberliegenden Hebel abstützt. Die Hervorhebung wirkt als vorteilhafter Klemmschutz und ist beispielsweise am hinteren Hebelabschnitt ausgebildet. Mit der Größe der Hervorhebung läßt sich vorgeben, inwieweit sich die Schneidbacken der Hebel - in den durch das verrastete Gleitelement vorbestimmten Winkelstellungen der Hebelabschnitte - aufeinander zu bewegen können.

Anspruch 12 sieht vor, daß die Schneidbacken zumindest abschnittsweise mit scharfen Schneiden versehen sind. Weiterhin wird der Anwendungskomfort des Kabelschneiders entsprechend Anspruch 13 dadurch gesteigert, daß eine Justiervorrichtung zum Nachstellen der Schneidbacken vorhanden ist. In einer ergänzenden Ausgestaltung nach Anspruch 14 sind die Schneidbacken zudem mit austauschbaren Schneiden versehen. Dies macht den Kabelschneider anwendungsfreundlicher und aufwendiges Nachschleifen der Schneiden überflüssig.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Draufsicht auf einen Kabelschneider,
- Fig. 2: eine Seitenansicht des Kabelschneiders von Fig. 1, teilweise im Schnitt,
- Fig. 3: eine vergrößerte Schnittansicht eines in einer Führungsausnehmung geführten Gleitelements des Kabelschneiders von Fig. 2,
- Fig. 4: eine Draufsicht des geöffneten Kabelschneiders von Fig. 1,
- Fig. 5: eine Draufsicht des Kabelschneiders von Fig. 1 in Schließstellung,
- Fig. 6: eine Draufsicht des Kabelschneiders von Fig. 1 in einer anderen Öffnungsstellung und
- Fig. 7: eine Draufsicht des Kabelschneiders von Fig. 1 in Schließstellung.

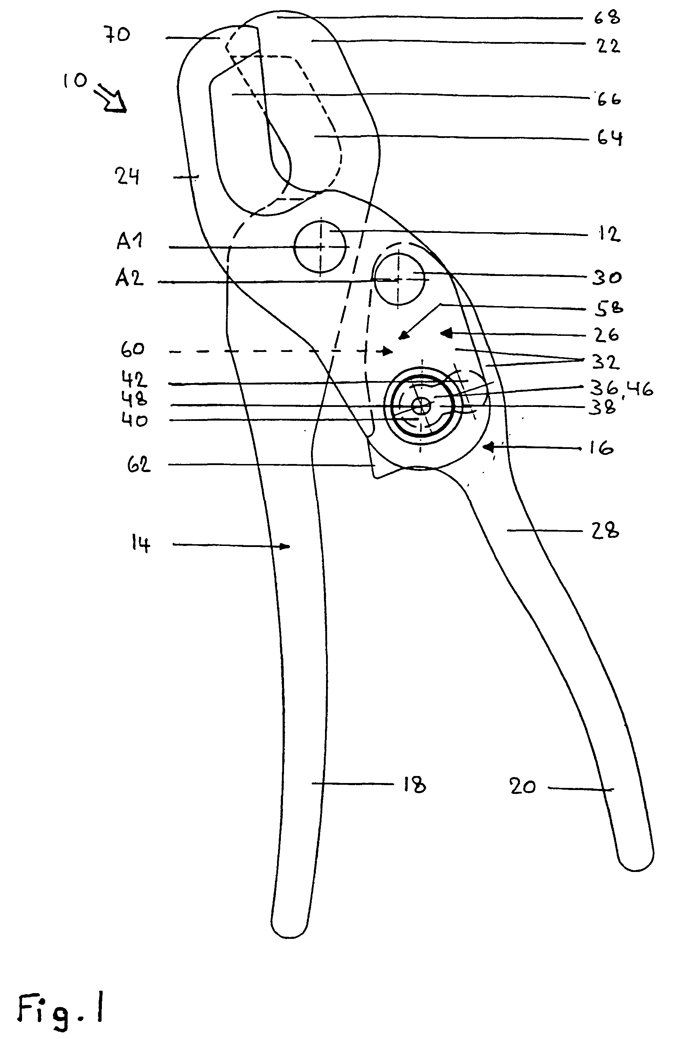

Der in Fig. 1 allgemein mit 10 bezeichnete Kabelschneider besteht aus einem ersten Hebel 14 und einem zweiten Hebel 16, die in einem ersten Drehgelenk 12 über Kreuz gegeneinander verschwenkbar sind. Der erste Hebel 14 besitzt einen ersten Handgriff 18 und eine erste Schneidbacke 22, der zweite Hebel 16 einen zweiten Handgriff 20 und eine zweite Schneidbacke 24. Die Handgriffe 18, 20 und die Schneidbacken 22, 24 sind an sich gegenüberliegenden Enden der Hebel 14, 16 angeordnet, während das erste Drehgelenk 12 mit zugehöriger Drehachse A1 zwischen den Handgriffen 18, 20 und den Schneidbacken 22, 24 liegt.

Der zweite Hebel 16 ist in einen vorderen Hebelabschnitt 26 und in einen hinteren Hebelabschnitt 28 unterteilt, die in einem zweiten Drehgelenk 30 um eine Drehachse A2 gegeneinander verschwenkbar sind. Gleichzeitig stehen sie über ein in einer Führungsausnehmung 36 geführtes Gleitelement 38 miteinander in Eingriff. Hierdurch wird die Verschwenkbarkeit der Hebelabschnitte 26, 28 um die Achse A2 begrenzt, wobei das in der Führungsausnehmung 36 geführte Gleitelement 38 vorgibt, welche Winkelstellungen die beiden verschwenkbaren Hebelabschnitte 26, 28 zueinander einnehmen können.

Um die beiden Hebelabschnitte 26, 28 in bestimmten Winkelstellungen arretieren zu können, ist das Gleitelement 38 in Rastausnehmungen 40, 42 verrastbar. Diese sind Bestandteil der Führungsausnehmung 36 und bevorzugt als Sacklöcher ausgebildet, die als kreisrunde Erweiterungen an beiden Enden der Führungsausnehmung 36 liegen.

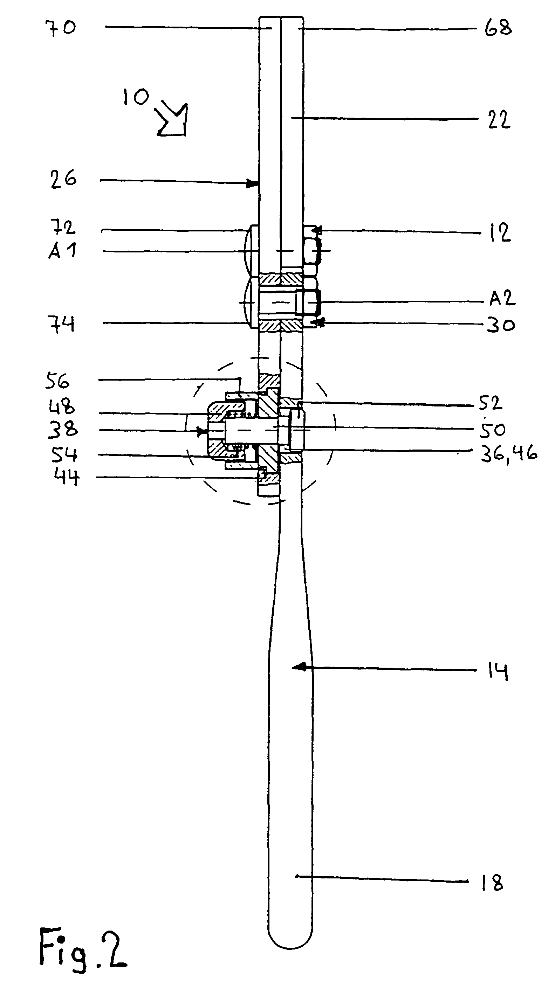

Wie Fig. 2 zeigt, besitzt der vordere Hebelabschnitt 26 unterhalb der Drehachse A2 ein Gewindeloch 44. Dieses ist so angeordnet, daß es beim Verschwenken der Hebelabschnitte 26, 28 stets oberhalb der Führungsausnehmung 36 zu liegen kommt, was dadurch möglich ist, daß die im hinteren Hebelabschnitt 28 vorgesehene Führungsausnehmung 36 als gebogenes Langloch 46 ausgeführt ist, welches konzentrisch zur Drehachse A2 des zweiten Drehgelenks 30 verläuft. Dementsprechend bewegt sich auch das Gleitelement 38 stets konzentrisch zur Achse A2.

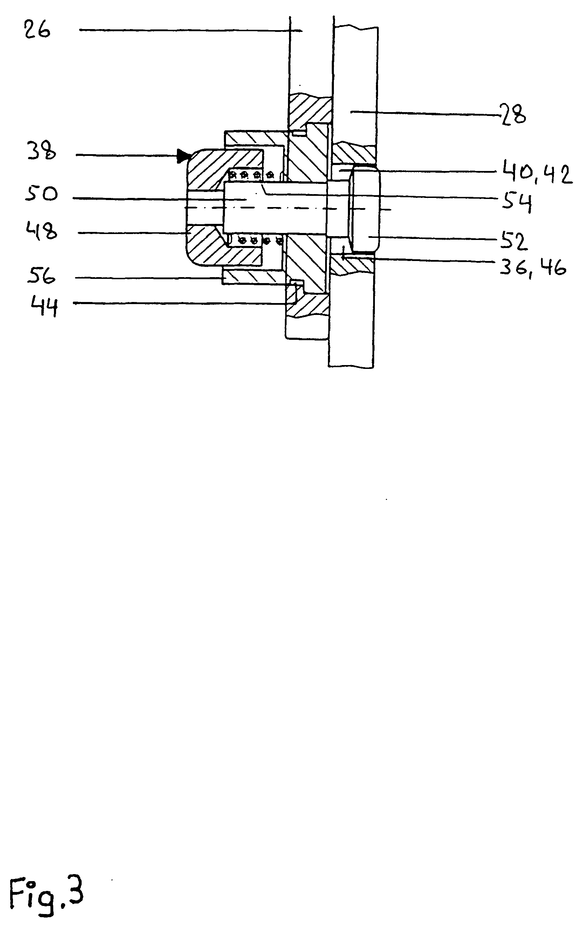

Das Gleitelement 38 besteht, wie in Fig. 3 erkennbar, aus einem Druckknopf 48, der auf einen längsbeweglich gelagerten, federbelasteten Bolzen 50 aufgeschraubt ist. Der Bolzen 50 ist an seiner dem Langloch 46 zugewandten Unterseite verdickt als Pilzkopf 52 ausgeführt. Der Außendurchmesser des Pilzkopfs 52 ist derart bemessen, daß er nur in die beiden Sacklöcher 40, 42 der Führungsausnehmung 36 vollständig eingreifen kann.

Wird der Druckknopf 48 betätigt, drückt er den Bolzen 50 durch die beiden Hebelabschnitte 26, 28 nach hinten. Gleichzeitig wird eine über den Bolzen 50 geschobene Druckfeder 54 gestaucht und gegen eine in das Gewindeloch 44 eingeschraubte, zylindrische Aufnahmebuchse 56 gedrückt. Der Pilzkopf 52 des Bolzens 50 tritt aus der ersten Rastausnehmung 40 heraus und die Hebelabschnitte 26, 28 werden aus ihrer eine erste Winkelstellung definierenden Verrastung 32 gelöst.

Durch Verschwenken der Hebelabschnitte 26, 28 um die Drehachse A2 gelangt der Hebel 16 in eine geknickte Stellung. Sobald der Pilzkopf 52 die Rastvertiefung 40 verlassen hat, ist es möglich, das Gleitelement 38 entlang des Langlochs 46 auf einer Teilkreisbahn zu bewegen, bis der Hebel 16 eine zweite Winkelstellung einnimmt, die durch die Länge des Langloches 46 bzw. der Lage der zweiten Rastausnehmung 42 bestimmt ist. Sobald die Hebelabschnitte 26, 28 ihre Endstellung erreichen, liegt der Pilzkopf 52 des Bolzens 50 unmittelbar über der zweiten Rastausnehmung 42. Die Druckfeder 54 entspannt sich und der Pilzkopf 52 versenkt sich selbsttätig in der zweiten Rastausnehmung 42. Die beiden Hebelabschnitte 26, 28 sind nun zueinander geknickt angeordnet und in dieser Position, der zweiten Winkelstellung 34, durch Verrastung sicher fixiert.

Wird das Gleitelement 38 nicht bis in die zweite Rastausnehmung 42 bewegt, sondern in einer Position zwischen den beiden Rastausnehmungen 40, 42 belassen, findet keine Verrastung statt. Der Pilzkopf 52 des Bolzens 50 liegt auf dem zwischen den Sacklöchern schmal ausgeführten Teil des Langlochs 46 außenseitig auf und ist nicht gegen Verschiebung gesichert. Sobald jedoch eine Kraft auf die Hebelabschnitte 26, 28 oder die Schneidbacken 22, 24 einwirken sollte, gelangen die Hebelabschnitte 26, 28 sofort in ihre definierten Winkelstellung, wobei der Rastbolzen 50, 52 automatisch in die zugeordneten Rastausnehmungen 42 einrasten.

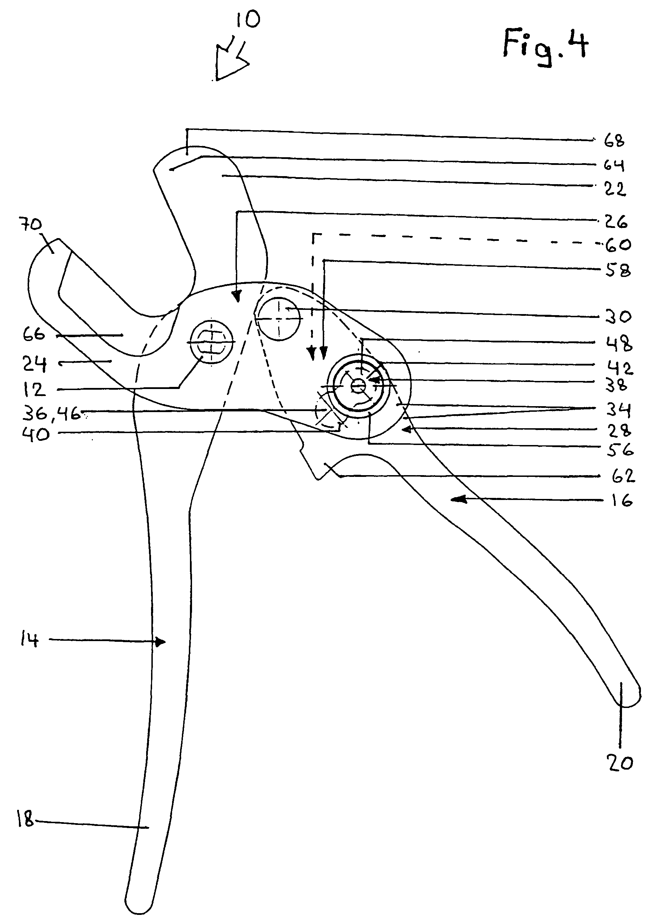

Man erkennt beispielsweise in Fig. 4, daß sich die Hebelabschnitte 26, 28 an ihren einander zugewandten Enden 58, 60 flächig überlappen. In diesen Bereichen liegen das Drehgelenk 30, das Gleitelement 38, das Gewindeloch 44 sowie die Führungsausnehmung 36, so daß der Hebel 16 in jeder Winkelstellung eine insgesamt hohe Stabilität aufweist.

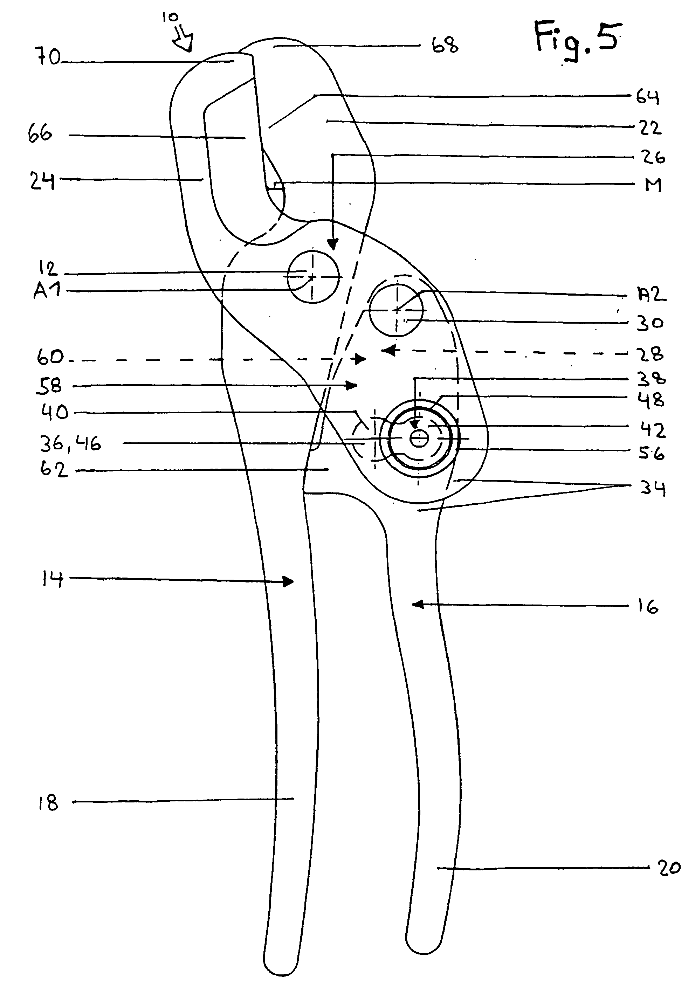

Das Ende 60 des hinteren Hebelabschnitts 28 besitzt zusätzlich eine Hervorhebung 62. Diese befindet sich bevorzugt zwischen der Führungsausnehmung 36 und dem zweiten Handgriff 20. Sie zeigt in Richtung des ersten Hebels 14 und ist derart geformt, daß sie sich in jeder Winkelstellung der Hebelabschnitte 26, 28 am ersten Hebel 14 abstützen kann. Dadurch wird zunächst erreicht, daß versehentlich zwischen die Hebel 14, 16 geratende Körperteile beim Schließen der Zange nicht eingeklemmt werden. Darüber hinaus sorgt die Hervorhebung 62 dafür, daß sich die Schneidbacken 22, 24 in einer ausgewählten Winkelstellung des Hebels 26 nur bis zu einem bestimmten Punkt aufeinander zu bewegen können, also einen Mindestabstand M zueinander einnehmen müssen. Dieser in Fig. 5 gezeigte Mindestabstand M wird nicht nur durch die Hervorhebung 62 sondern auch durch die Ausbildung der ausgezeichneten Winkeleinstellungen 32, 34 der Hebelabschnitte 26, 28 festgelegt. Die Größe des Mindestabstandes M legt fest, wie tief die Schneidbacken 22, 24 des Kabelschneiders 10 in einer gewählten Winkelstellung 32, 34 in die zu durchtrennende Leitung eindringen.

Ein Verletzungsschutz ist auch an den Schneidbacken 22, 24 vorgesehen. Diese sind an ihren zueinander ausgerichteten Seiten zu dünnen Schneiden 64, 66 abgeflacht. Diese Abflachung setzt sich aber nicht bis in die Endbereiche 68, 70 des Kabelschneiders 10 fort. Vielmehr sind diese Endbereiche 68, 70 zum Schutz des Benutzers genauso dick ausgeführt, wie die Außenseiten der Schneidbacken 22, 24.

Darüber hinaus kann der Kabelschneider 10 mit einer (nicht dargestellten) Justiervorrichtung zum Nachstellen der Schneidbacken 22, 24 und/oder der Schneiden 64, 66 ausgestattet sein. Eine Nachjustierung ist am einfachsten mit Hilfe eines Maulschlüssels, eines Schraubendrehers o.dgl. zu erreichen, der in einen Gelenkzapfen 72 des mit einem (nicht gezeigten) Kunststoffeinsatz versehenen ersten Drehgelenks 12 eingreift. Um auch die Hebelabschnitte 26, 28 in einem konstanten Abstand zueinander zu halten, ist eine weitere Justiervorrichtung vorgesehen, beispielsweise in Form eines Drehzapfens 74 mit (nicht dargestelltem) Kunststoffeinsatz am zweiten Drehgelenk 30.

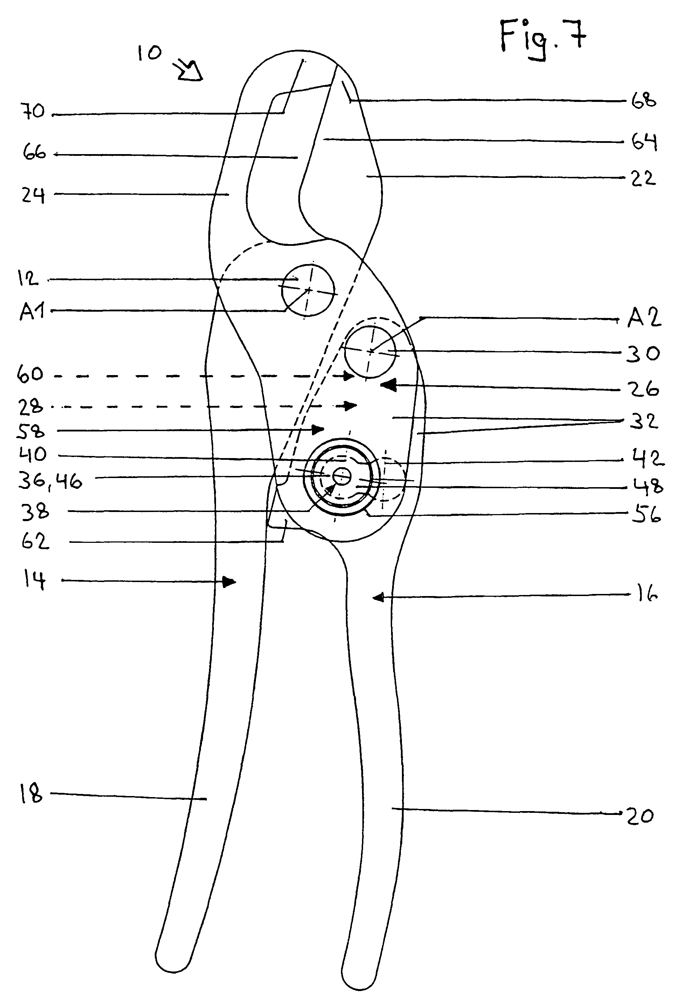

Die Funktionsweise des erfindungsgemäßen Kabelschneiders 10 ist in den Fig. 4 bis 7 dargestellt.

Der Kabelschneider 10 wird bevorzugt zum Durchtrennen von Leitungen verwendet. Er eignet sich bei entsprechender Nitrid- Phosphat- oder Carbidhärtung der Schneiden 64, 66 oder bei der Verwendung von Zink/Nickel- oder Zink/Chrom/Nickel-Überzügen auch zum schneidenden Bearbeiten von Metallfolien und Blechen. Schneiden 64, 66 aus Titannitrid, Wolframcarbid, Borcarbid oder aus entsprechenden Carbonitriden erfüllen diese Aufgabe gleichermaßen gut. Auch dicke Leitungen sind für den Kabelschneider 10 kein Hindernis und können im Einhandbetrieb bearbeitet werden. Dies liegt daran, daß dank der verschiedenen einzunehmenden Winkelstellungen 32, 34 der Hebelabschnitte 26, 28 unterschiedliche Öffnungsweiten der Schneidbacken 22, 24 fest eingestellt werden können. Dabei behalten die in ihrer Form leicht gekrümmten Handgriffe 18, 20 zueinander einen solchen Abstand, daß sie noch mit einer Hand zu umgreifen sind.

Um eine Leitung zu durchtrennen, wird der Kabelschneider 10 zunächst in die in Fig. 4 abgebildete Öffnungsposition gebracht und das zu bearbeitende (nicht dargestellte) Werkstück eingelegt. Das Gleitelement 38 ist in der zweiten Rastausnehmung 42 verrastet und die Hebelabschnitte 26, 28 nehmen zueinander eine definierte Winkelstellung ein. In dieser Winkelstellung bilden sie einen abgewinkelten Hebel 16. Drückt man den ersten Hebel 14 und den zweiten abgewinkelten Hebel 16 zusammen, bewegen sich die Schneidbacken 22, 24 aufeinander zu. Hierbei nehmen die Schneiden 64, 66, wie in Fig. 5 zu sehen, im geschlossenen Zustand der Zange, bei dem sich die Hervorhebung 62 auf dem ersten Hebel 14 abstützt, einen Abstand M ein. Die Schneidbacken 22, 24 können nicht vollständig geschlossen werden. Die zu bearbeitende Leitung wird mithin nicht vollständig durchtrennt. Dies erfolgt in einem zweiten Schritt.

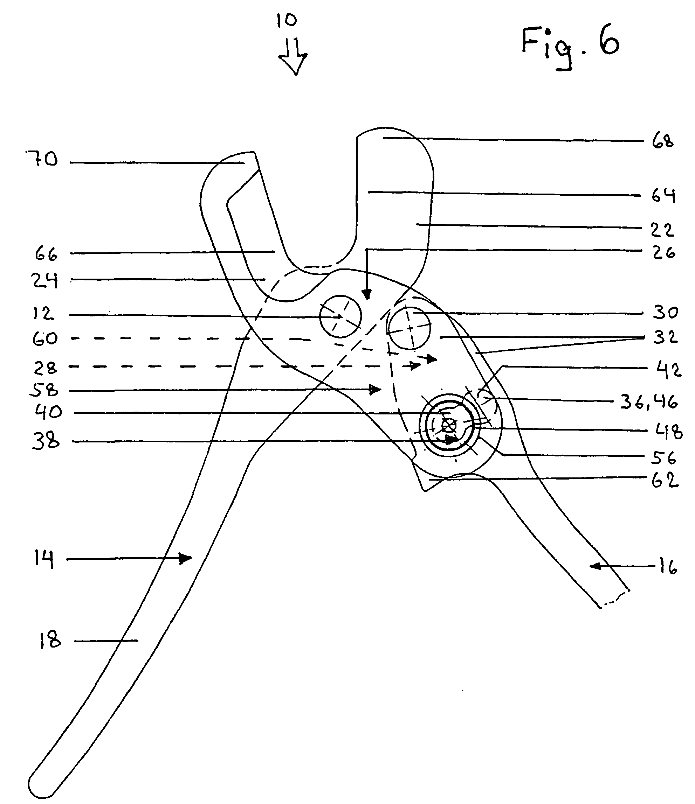

In diesem zweiten Schritt wird das Gleitelement 38, wie in Fig. 6 zu sehen, aus der zweiten Rastausnehmung 42 gelöst und durch Verschwenken der Hebelabschnitte 26, 28 in die erste Rastausnehmung 40 verbracht. Danach nehmen die beiden Hebelabschnitte 26, 28 zueinander eine weitere Winkelstellung ein, in welcher der Hebel 16 nun nicht mehr abgewinkelt, sondern langgestreckt ist. Bewegt man nun die beiden Hebel 14, 16 bis zu dem durch die Hervorhebung 62 bestimmten Anschlag aufeinander zu, werden die Schneidbacken 22, 24 vollständig geschlossen; die Leitung wird vollständig durchtrennt.

Die Erfindung ist nicht auf eine der vorbeschriebenen Ausführungsformen beschränkt, sondern in vielfältiger Weise abwandelbar. So sind in der Führungsausnehmung 36 mehr als zwei Rastausnehmungen 40, 42 in Form von Sacklöchern vorsehbar. Dadurch können die beiden Hebelabschnitte 26, 28 in mehr als zwei ausgezeichneten Winkelstellungen 32, 34 miteinander verrastet werden. Dies bedeutet, daß ein Schneidvorgang nicht in zwei, sondern in so vielen Etappen vorgenommen wird, wie Rastausnehmungen vorhanden sind.

Man kann eine flache Bauform des Kabelschneiders 10 erreichen, wenn ein Gleitelement senkrecht zu den Drehachsen A1, A2 angeordnet ist. Dies gelingt, wenn der Kabelschneider 10 verlängerte Hebel 14, 16 besitzt, so daß ein als Gleitelement wirkender, federbelasteter Bolzen liegend auf dem hinteren Hebelabschnitt 28 des zweiten Hebels 16 befestigt werden und in griffrichtungsseitge Rastausnehmungen des vorderen Hebelabschnitts 26 eingreifen kann.

Um den in den ausgezeichneten Winkelstellungen 32, 34 eingenommenen Mindestabstand M der Schneidbacken 22, 24 variabel zu gestalten, kann die Hervorhebung 62 durch eine Stellvorrichtung beweglich ausgeführt sein. Die Veränderung des Mindestabstandes M ist auch möglich, wenn der Kabelschneider 10 auswechselbare Schneiden 64, 66 besitzt, die in ihrer Breite unterschiedlich sind.

### Bezugszeichenliste

- A1: Drehachse des ersten Drehgelenks
- A2: Drehachse des zweiten Drehgelenks
- M: Mindestabstand

- 10: Kabelschneider
- 12: erstes Drehgelenk
- 14: erster Hebel
- 16: zweiter Hebel
- 18: erster Handgriff
- 20: zweiter Handgriff
- 22: erste Schneidbacke
- 24: zweite Schneidbacke
- 26: vorderer Hebelabschnitt
- 28: hinterer Hebelabschnitt
- 30: zweites Drehgelenk
- 32: erste Winkelstellung
- 34: zweite Winkelstellung
- 36: Führungsausnehmung
- 38: Gleitelement
- 40: erste Rastausnehmung
- 42: zweite Rastausnehmung
- 44: Gewindeloch
- 46: Langloch
- 48: Druckknopf
- 50: Bolzen
- 52: Pilzkopf, Bolzenpilzkopf
- 54: Druckfeder
- 56: Aufnahmebuchse
- 58: Ende des vorderen Hebelabschnitts
- 60: Ende des hinteren Hebelabschnitts
- 62: Hervorhebung
- 64: erste Schneide
- 66: zweite Schneide
- 68: erster Endbereich
- 70: zweiter Endbereich
- 72: Gelenkzapfen
- 74: Drehzapfen

## Patentansprüche

1. Kabelschneider (10) zum Durchtrennen von Kabeln, Leitungen, Rohren u.dgl. mit zwei in einem gemeinsamen ersten Drehgelenk (12) schwenkbar verbundenen, sich kreuzenden Hebeln (14, 16), die in ihren unteren Bereichen jeweils einen Handgriff (18, 20) und in ihren oberen Bereichen je eine Schneidbacke (22, 24) haben, wobei einer der Hebel (14, 16) zweiteilig ausgebildet ist, mit einem die Schneidbacke (22, 24) bildenden vorderen Hebelabschnitt (26) und mit einem den Handgriff (20) bildenden hinteren Hebelabschnitt (28) und wobei die Hebelabschnitte (26, 28) über ein zweites Drehgelenk (30) schwenkbar miteinander verbundenen und in wenigstens zwei ausgezeichneten Winkelstellungen (32, 34) miteinander verrastbar sind, **dadurch gekennzeichnet,**
a) daß die Schwenkbewegung der Hebelabschnitte (26, 28) zwischen den ausgezeichneten Winkelstellungen (32, 34) von einem in einer Führungsausnehmung (36) geführten Gleitelement (38) begrenzt ist, wobei das Gleitelement (38) ein Rastelement ist oder bildet,
b) daß das Gleitelement (38) in den ausgezeichneten Winkelstellungen (32, 34) der Hebelabschnitte (26, 28) mit je einer korrespondierenden Rastausnehmung (40, 42) in Eingriff bringbar ist,
c) wobei die Rastausnehmungen (40, 42) in der Führungsausnehmung (36) ausgebildet sind, und
d) wobei das Gleitelement (38) ein längsbeweglich gelagerter, federbelasteter Bolzen (50) ist.

2. Kabelschneider nach Anspruch 1, **dadurch gekennzeichnet, daß** das Gleitelement (38) in den ausgezeichneten Winkelstellungen (32, 34) der Hebelabschnitte (26, 28) selbsttätig in der Rastausnehmung (40, 42) verrastbar ist.

3. Kabelschneider nach Anspruch 1 oder 2, **dadurch gekennzeichnet, daß** der Bolzen (50) parallel zu den Drehachsen (A1, A2) der Drehgelenke (12, 30) liegt.

4. Kabelschneider nach einem der Ansprüche 1 oder 2, **dadurch gekennzeichnet, daß** der Bolzen (50) senkrecht zu den Drehachsen (A1, A2) der Drehgelenke (12, 30) angeordnet ist.

5. Kabelschneider nach einem der Ansprüche 1 bis 4, **dadurch gekennzeichnet, daß** der Bolzen (50) am vorderen Hebelabschnitt (26) angeordnet ist.

6. Kabelschneider nach einem der Ansprüche 1 bis 5, **dadurch gekennzeichnet, daß** die dem hinteren Hebelabschnitt (28) zugewandte Seite des Bolzens (50) verdickt oder verbreitert ausgeführt ist.

7. Kabelschneider nach einem der Ansprüche 1 bis 6, **dadurch gekennzeichnet, daß** die Führungsausnehmung (36) ein konzentrisch zum zweiten Drehgelenk (30) im hinteren Hebelabschnitt (28) ausgebildetes Langloch (46) ist, welches zumindest endseitig mit Rastausnehmungen (40, 42) versehen ist.

8. Kabelschneider nach einem der Ansprüche 1 bis 7, **dadurch gekennzeichnet, daß** die Rastausnehmungen (40, 42) Sacklöcher sind.

9. Kabelschneider nach einem der Ansprüche 1 bis 8, **dadurch gekennzeichnet, daß** sich die Hebelabschnitte (26, 28) an ihren einander zugewandten Enden (58, 60) flächig überlappen.

10. Kabelschneider nach einem der Ansprüche 1 bis 9, **dadurch gekennzeichnet, daß** einer der Hebel (14, 16) eine Hervorhebung (62) trägt oder bildet, die in Richtung des jeweils anderen Hebels (14) zeigt und sich bei geschlossenen Hebeln (14, 16) auf dem gegenüberliegenden Hebel (14) abstützt.

11. Kabelschneider nach Anspruch 10, **dadurch gekennzeichnet, daß** die Hervorhebung (62) am hinteren Hebelabschnitt (28) ausgebildet ist.

12. Kabelschneider nach einem der Ansprüche 1 bis 11, **dadurch gekennzeichnet, daß** die Schneidbacken (22, 24) zumindest abschnittsweise mit scharfen Schneiden (64, 66) versehen sind.

13. Kabelschneider nach einem der Ansprüche 1 bis 12, **dadurch gekennzeichnet, daß** eine Justiervorrichtung zum Nachstellen der Schneidbacken (22, 24) vorhanden ist.

14. Kabelschneider nach einem der Ansprüche 1 bis 13, **dadurch gekennzeichnet, daß** die Schneidbacken (22, 24) mit austauschbaren Schneiden versehen sind.

## Claims

1. Cable cutter (10) for cutting off cables, conduits, tubes, etc., comprising two crossing levers (14, 16) which are pivotably connected by a common first joint (12) and which each have a handle (!8, 20) in their lower portions and a cutting jaw (22, 24) in their upper portions, one of the levers (14, 16) including two parts by way of a front section (26) that forms the cutting jaw and of a rear section (28) that forms the handle (20), the lever sections (26, 28) being pivotably connected by a second joint (30) and being adapted for locking in at least two selected angular positions (32, 34), **wherein**
a) the pivoting motion of the lever sections (26, 28) between the selected angular positions (26, 28) is limited by a sliding element (38) that is guided in a guiding recess (36) and that is or forms a locking means,
b) the sliding element (38) is adapted to engage, in the selected angular positions (32, 34) of the lever sections (26, 28), to engage a matching locking recess (40, 42) each,
c) the locking recesses (40, 42) being provided in the guiding recess (36), and
d) the siding element (38) is a spring-biassed bolt (50) supported for longitudinal motion.

2. Cable cutter according to claim 1, **wherein** the sliding element (38) is adapted for automatic locking in the locking recesses (40, 42) in the selected angular positions (32, 34) of the lever sections (26, 28).

3. Cable cutter according to claim 1 or claim 2, **wherein** the bolt (50) is parallel to the rotational axes (A1, A2) of the joints (12, 30).

4. Cable cutter according to claim 1 or claim 2, **wherein** the bolt (50) is perpendicular to the rotational axes (A1, A2) of the joints (12, 30).

5. Cable cutter according to any one of claims 1 to 4, **wherein** the bolt (50) is arranged at the lever front section (26).

6. Cable cutter according to any one of claims 1 to 5, **wherein** the side of the bolt (50) that faces the lever rear section (28) is enlarged or broadened.

7. Cable cutter according to any one of claims 1 to 6, **wherein** the guiding recess (36) is an elongated hole (46) which is concentric to the second joint (30) in the lever rear section (28) and which is, at least at its ends, provided with locking recesses (40, 42).

8. Cable cutter according to any one of claims 1 to 7, **wherein** the locking recesses (40, 42) are blind holes.

9. Cable cutter according to any one of claims 1 to 8, **wherein** surface portions of the lever sections (26, 28) are adapted to overlap at their facing ends (58, 60).

10. Cable cutter according to any one of claims 1 to 9, **wherein** one of the levers (16) carries or forms a protrusion (62) pointing in the direction of the respective other lever (14) and is supported thereon when the levers (14, 16) are in their closed position.

11. Cable cutter according to claim 10, **wherein** the protrusion (62) is provided at the lever rear section (28)

12. Cable cutter according to any one of claims 1 to 11, **wherein** at least portions of the cutting jaws (22, 24) have sharp cutting edges (64, 66).

13. Cable cutter according to any one of claims 1 to 12, **wherein** adjusting means are provided for setting the cutting jaws (22, 24).

14. Cable cutter according to any one of claims 1 to 13, **wherein** the cutting jaws (22, 24) are provided with exchangeable cutting edges.

## Revendications

1. Découpeur de câbles (10) pour sectionner des câbles, conduites, tuyaux ou autres, avec deux leviers (14, 16) croisés et assemblés pivotables par un premier pivot commun (12), qui sont pourvus respectivement d'une poignée (18, 20) dans leur section inférieure et d'une mâchoire à tranchant (22, 24) dans leur section supérieure, l'un des leviers (14, 16) étant conçu en deux parties, avec une section avant (26) du levier formant la mâchoire à tranchant (22, 24) et une section arrière (28) du levier formant la poignée (20), et les sections de levier (26, 28) étant assemblées pivotables par un second pivot (30) et pouvant être enclenchées l'une dans l'autre en au moins deux positions angulaires marquées (32, 34), **caractérisé en ce que**
a) par un élément à coulisse (38) guidé dans un évidement de guidage (36), le mouvement de pivotement des sections de levier (26, 28) est limité aux positions angulaires marquées (32, 34), l'élément à coulisse (38) étant ou formant un élément d'enclenchement,
b) dans les positions angulaires marquées (32, 34) des sections de levier (26, 28), l'élément à coulisse (38) peut s'engager dans un évidement d'enclenchement correspondant respectif (40, 42),
c) les évidements d'enclenchement (40, 42) étant façonnés dans l'évidement de guidage (36), et
d) l'élément à coulisse (38) étant un boulon (50) chargé par un ressort et logé de manière à pouvoir se déplacer longitudinalement.

2. Découpeur de câbles selon la revendication 1, **caractérisé en ce que** l'élément à coulisse (38) peut être enclenché automatiquement dans l'évidement d'enclenchement (40, 42), dans les positions angulaires marquées (32, 34) des sections de levier (26, 28).

3. Découpeur de câbles selon la revendication 1 ou 2, **caractérisé en ce que** le boulon (50) est agencé parallèle aux axes de rotation (A1, A2) des pivots (12, 30).

4. Découpeur de câbles selon l'une des revendications 1 ou 2, **caractérisé en ce que** le boulon (50) est agencé perpendiculaire aux axes de rotation (A1, A2) des pivots (12, 30).

5. Découpeur de câbles selon l'une des revendications 1 à 4, **caractérisé en ce que** le boulon (50) est disposé sur la section avant (26) du levier.

6. Découpeur de câbles selon l'une des revendications 1 à 5, **caractérisé en ce que** le côté du boulon (50) qui est tourné vers la section arrière (28) du levier a été façonné plus épais ou plus large.

7. Découpeur de câbles selon l'une des revendications 1 à 6, **caractérisé en ce que** l'évidement de guidage (36) est un trou oblong (46) qui a été façonné dans la section arrière (28) du levier, qui a été conçu concentrique par rapport au second pivot (30) et qui, au moins aux extrémités, a été pourvu d'évidements d'enclenchement (40, 42).

8. Découpeur de câbles selon l'une des revendications 1 à 7, **caractérisé en ce que** les évidements d'enclenchement (40, 42) sont des trous borgnes.

9. Découpeur de câbles selon l'une des revendications 1 à 8, **caractérisé en ce qu'avec** leurs extrémités tournées l'une vers l'autre (58, 60), les sections de levier (26, 28) se recouvrent en surface.

10. Découpeur de câbles selon l'une des revendications 1 à 9, **caractérisé en ce que** l'un des leviers (14, 16) porte ou forme une protubérance (62) qui montre en direction de l'autre levier respectif (14) et qui, en cas de leviers fermés (14, 16), s'appuie contre le levier opposé (14).

11. Découpeur de câbles selon la revendication 10, **caractérisé en ce que** la protubérance (62) est façonnée sur la section arrière (28) du levier.

12. Découpeur de câbles selon l'une des revendications 1 à 11, **caractérisé en ce qu'**au moins par sections, les mâchoires à tranchant (22, 24) sont pourvues de tranchants affilés (64, 66).

13. Découpeur de câbles selon l'une des revendications 1 à 12, **caractérisé en ce qu'**il y a un dispostif d'ajustage pour réajuster les mâchoires à tranchant (22, 24).

14. Découpeur de câbles selon l'une des revendications 1 à 13, **caractérisé en ce que** les mâchoires à tranchant (22, 24) sont pourvues de tranchants échangeables.
